# EUROPEAN PATENT APPLICATION

(11) **EP 4 527 681 A1**
(43) Date of publication of application: **26.03.2025**
(21) Application number: 23829646.1
(22) Date of filing: 21.04.2023
(51) Int. Cl.: B60L 53/20, B60L 1/00

(54) **ON-BOARD CHARGER, ON-BOARD POWER SYSTEM, AND ELECTRIC VEHICLE**

(30) Priority: 29.06.2022 CN 202210751597
(71) Applicant: Huawei Digital Power Technologies Co., Ltd., Shenzhen, Guangdong 518043 (CN)
(72) Inventor: FENG, Ningbo, Shenzhen, Guangdong 518043 (CN); LIANG, Zhigang, Shenzhen, Guangdong 518043 (CN); MENG, Yuandong, Shenzhen, Guangdong 518043 (CN)
(74) Representative: Gill Jennings & Every LLP
(86) International application number: PCT/CN2023/089907
(87) International publication number: WO 2024/001459

(57) **Abstract**

An on-board charger includes an insulating housing (100) and an on-board charging module (101). **In** the on-board charging module (101), a bidirectional direct current conversion circuit (1012) is configured to receive a first direct current transmitted by a direct current bus (1011), and output a second direct current through a power battery connection port (1001) to supply power to a power battery (12), or configured to receive, through a power battery connection port (1001), power supplied by a power battery (12), and output a first direct current. A first bridge arm circuit (1010) is configured to receive an alternating current through an alternating current power supply input port (1000), and output the first direct current, or configured to receive the first direct current, and output a first alternating current through an alternating current load power supply port (1002) to supply power to an alternating current load (13). A second bridge arm circuit (1013) is configured to receive the first direct current and output a second alternating current through the alternating current load power supply port (1002) to supply power to the alternating current load (13). **In** this way, the on-board charger is compatible with a function of supplying power to the power battery (12) and a function of supplying power to the alternating current load (13). Therefore, a structural layout is simpler, an integration level is high, power supply flexibility is high, and applicability is high. An on-board power system and an electric vehicle are further disclosed.

## Description

This application claims priority to Chinese Patent Application No. 202210751597.8, filed with the China National Intellectual Property Administration on June 29, 2022 and entitled "ON-BOARD CHARGER, ON-BOARD POWER SYSTEM, AND ELECTRIC VEHICLE", which is incorporated herein by reference in its entirety.

### TECHNICAL FIELD

This application relates to the field of power electronics technologies, and in particular, to an on-board charger, an on-board power system, and an electric vehicle.

### BACKGROUND

Currently, an electric vehicle includes a power battery, an on-board charger (on-board charger, OBC), and a compressor. The on-board charger is configured to supply power to the power battery. However, when the compressor starts to work, the on-board charger cannot supply power to the compressor, resulting in poor applicability.

### SUMMARY

This application provides an on-board charger, an on-board power system, and an electric vehicle, so that the on-board charger can be compatible with a function of supplying power to a power battery and a function of supplying power to an alternating current load. Therefore, a structural layout is simpler, an integration level is high, power supply flexibility is high, and applicability is high.

According to a first aspect, this application provides an on-board charger, configured to supply power to at least one of a power battery and an alternating current load by using an alternating current power supply, or supply power to an alternating current load by using a power battery. The on-board charger includes:
an insulating housing, provided with an alternating current power supply input port, a power battery connection port, and an alternating current load power supply port; and
an on-board charging module, disposed inside the insulating housing, and including a first bridge arm circuit, a direct current bus, a bidirectional direct current conversion circuit, and a second bridge arm circuit, where
the direct current bus is configured to transmit a first direct current;
the bidirectional direct current conversion circuit is configured to receive the first direct current, and output a second direct current through the power battery connection port to supply power to the power battery, or configured to receive, through the power battery connection port, power supplied by the power battery, and output the first direct current;
the first bridge arm circuit is configured to receive an alternating current through the alternating current power supply input port, and output the first direct current, or configured to receive the first direct current, and output a first alternating current through the alternating current load power supply port to supply power to the alternating current load; and
the second bridge arm circuit is configured to receive the first direct current, and output a second alternating current through the alternating current load power supply port to supply power to the alternating current load.

In this application, the on-board charger may be compatible with a function of supplying power to the power battery and a function of supplying power to the alternating current load. Therefore, a structure is simpler, an integration level is high, and costs are lower. In addition, the alternating current power supply may be used for supplying power to the power battery alone, the alternating current power supply or the power battery may be used for supplying power to the alternating current load alone, or the alternating current power supply may be used for supplying power to both the power battery and the alternating current load, thereby meeting different power supply requirements of the on-board charger. Therefore, power supply flexibility is high, and applicability is high.

With reference to the first aspect, in a first possible implementation, the alternating current power supply input port and the alternating current load power supply port are provided opposite to each other on two sides of the insulating housing, and the alternating current power supply input port and the power battery connection port are provided on a same side of the insulating housing. The first bridge arm circuit is disposed on a side that is inside the insulating housing and that is close to the alternating current power supply input port, the second bridge arm circuit is disposed on a side that is inside the insulating housing and that is close to the alternating current load power supply port, the bidirectional direct current conversion circuit is disposed on the side that is inside the insulating housing and that is close to the power battery connection port, and both the first bridge arm circuit and the second bridge arm circuit are isolated from the bidirectional direct current conversion circuit to implement circuit protection.

With reference to the first aspect or the first possible implementation of the first aspect, in a second possible implementation, the first bridge arm circuit includes a first bridge arm, a second bridge arm, and a third bridge arm. Each of the first bridge arm, the second bridge arm, and the third bridge arm is connected in series between a positive electrode and a negative electrode of the direct current bus, a midpoint of each of the first bridge arm and the second bridge arm is connected to a live wire of the alternating current power supply, and a midpoint of the third bridge arm is connected to a neutral wire of the alternating current power supply. Each of the first bridge arm, the second bridge arm, and the third bridge arm includes a first switch and a second switch connected in series, and a series connection point of the first switch and the second switch serves as a midpoint of each bridge arm.

With reference to the second possible implementation of the first aspect, in a third possible implementation, the second bridge arm circuit includes three fourth bridge arms. Each of the three fourth bridge arms is connected in series between the positive electrode and the negative electrode of the direct current bus, and each fourth bridge arm includes a third switch and a fourth switch connected in series.

With reference to the third possible implementation of the first aspect, in a fourth possible implementation, the on-board charger is configured to supply power to the power battery by using the alternating current power supply, and the on-board charging module includes a controller.

The controller is configured to:
control the first switch and the second switch in each of the first bridge arm, the second bridge arm, and the third bridge arm to be alternately turned on, to convert the alternating current received by the alternating current power supply input port into the first direct current, and control the bidirectional direct current conversion circuit to operate, to convert the first direct current into the second direct current; and
control the third switch and the fourth switch in each fourth bridge arm to be turned off, that is, the second bridge arm circuit stops operating.

In this application, switches in each of the first bridge arm circuit, the bidirectional direct current conversion circuit, and the second bridge arm circuit may be controlled to be turned on or turned off, so that the alternating current power supply supplies power to the power battery alone.

With reference to the third possible implementation of the first aspect, in a fifth possible implementation, the on-board charger is configured to supply power to the alternating current load by using the alternating current power supply, and the on-board charging module includes a controller.

The controller is configured to:
control the first switch and the second switch in each of the first bridge arm, the second bridge arm, and the third bridge arm to be alternately turned on, to convert the alternating current received by the alternating current power supply input port into the first direct current, and control the bidirectional direct current conversion circuit to stop operating; and
control the third switch and the fourth switch in each fourth bridge arm to be alternately turned on, to convert the first direct current into the second alternating current.

In this application, switches in each of the first bridge arm circuit, the bidirectional direct current conversion circuit, and the second bridge arm circuit may be controlled to be turned on or turned off, so that the alternating current power supply supplies power to the alternating current load alone.

With reference to the third possible implementation of the first aspect, in a sixth possible implementation, the on-board charger is configured to supply power to the power battery and the alternating current load by using the alternating current power supply, and the on-board charging module includes a controller.

The controller is configured to: control the first switch and the second switch in each of the first bridge arm, the second bridge arm, and the third bridge arm to be alternately turned on, to convert the alternating current received by the alternating current power supply input port into the first direct current;
control the bidirectional direct current conversion circuit to operate, to convert the first direct current into the second direct current; and
control the third switch and the fourth switch in each fourth bridge arm to be alternately turned on, to convert the first direct current into the second alternating current.

In this application, switches in each of the first bridge arm circuit, the bidirectional direct current conversion circuit, and the second bridge arm circuit may be controlled to be turned on or turned off, so that the alternating current power supply supplies power to both the power battery and the alternating current load. Therefore, power supply efficiency is higher.

With reference to the third possible implementation of the first aspect, in a seventh possible implementation, the on-board charger is configured to supply power to the alternating current load by using the power battery, the on-board charging module includes a controller and a fifth switch, and the midpoint of each of the first bridge arm and the second bridge arm is connected to the live wire of the alternating current power supply through the fifth switch.

The controller is configured to:
control the fifth switch to be turned off, and control the first switch and the second switch in each of the first bridge arm, the second bridge arm, and the third bridge arm to be alternately turned on, to convert the first direct current into the first alternating current; and
control the third switch and the fourth switch in each fourth bridge arm to be turned off.

In this application, switches in each of the first bridge arm circuit, the bidirectional direct current conversion circuit, and the second bridge arm circuit may be controlled to be turned on or turned off, so that the power battery supplies power to the alternating current load; and the fifth switch is controlled to be turned off, so that a short circuit of the alternating current power supply is avoided, thereby improving power supply safety of the load.

With reference to the third possible implementation of the first aspect, in an eighth possible implementation, the on-board charger is configured to supply power to the alternating current load by using the power battery, and the on-board charging module includes a controller.

The controller is configured to:
control the first switch and the second switch in each of the first bridge arm, the second bridge arm, and the third bridge arm to be turned off, and control the third switch and the fourth switch in each fourth bridge arm to be alternately turned on, to convert the first direct current into the second alternating current.

In this application, switches in each of the first bridge arm circuit, the bidirectional direct current conversion circuit, and the second bridge arm circuit may be controlled to be turned on or turned off, so that the power battery supplies power to the alternating current load. Therefore, costs are lower.

With reference to the eighth possible implementation of the first aspect, in a ninth possible implementation, the controller is configured to:
control a switching duty cycle of the bidirectional direct current conversion circuit to adjust the first direct current transmitted by the direct current bus, where the switching duty cycle is determined by an operating parameter of the alternating current load. In this application, the switching duty cycle is controlled to dynamically adjust a voltage value corresponding to the first direct current, so that the alternating current load works efficiently. Therefore, applicability is high.

With reference to the third possible implementation of the first aspect, in a tenth possible implementation, the midpoint of each of the first bridge arm, the second bridge arm, and the third bridge arm is connected to the alternating current load through the alternating current load power supply port; or
a midpoint of each fourth bridge arm is connected to the alternating current load through the alternating current load power supply port, and a series connection point of the third switch and the fourth switch in each fourth bridge arm serves as the midpoint of each fourth bridge arm.

According to a second aspect, this application provides an on-board power system, including a power battery and the on-board charger provided in any one of the first aspect to the tenth possible implementation of the first aspect, and the on-board charger is configured to supply power to the power battery. Because a structural layout of the on-board charger is simpler and an integration level is high, a structural layout of the on-board power system is simplified, and a power density of the on-board power system is improved.

With reference to the second aspect, in a first possible implementation, the on-board power system includes a compressor motor, and the on-board charger is configured to supply power to the compressor motor by using an alternating current power supply or supply power to the compressor motor by using the power battery. Therefore, power supply flexibility is high.

According to a third aspect, this application provides an electric vehicle, including a power battery, a drive motor, and the on-board charger provided in any one of the first aspect to the tenth possible implementation of the first aspect, the on-board charger is configured to supply power to the power battery, and the power battery is configured to supply power to the drive motor.

In this application, switches in each of the first bridge arm circuit, the bidirectional direct current conversion circuit, and the second bridge arm circuit may be controlled to be turned on or turned off, so that the alternating current power supply supplies power to the power battery alone, or the alternating current power supply supplies power to the alternating current load alone, or the alternating current power supply supplies power to both the power battery and the alternating current load, or the power battery supplies power to the alternating current load, thereby meeting different power supply requirements of the on-board charger. Therefore, power supply flexibility is high, and applicability is high.

### BRIEF DESCRIPTION OF DRAWINGS

FIG. 1A is a diagram of a structure of an electric vehicle according to this application;
FIG. 1B is a diagram of another structure of an electric vehicle according to this application;
FIG. 2 is a diagram of a structure of an on-board charger according to this application;
FIG. 3 is a diagram of another structure of an on-board charger according to this application;
FIG. 4A is a schematic of a circuit of an on-board charging module according to this application;
FIG. 4B is a schematic of another circuit of an on-board charging module according to this application; and
FIG. 5 is a diagram of a structure of an on-board power system according to this application.

### DESCRIPTION OF EMBODIMENTS

The following describes an on-board charger, an on-board power system, and an electric vehicle provided in this application with reference to the accompanying drawings.

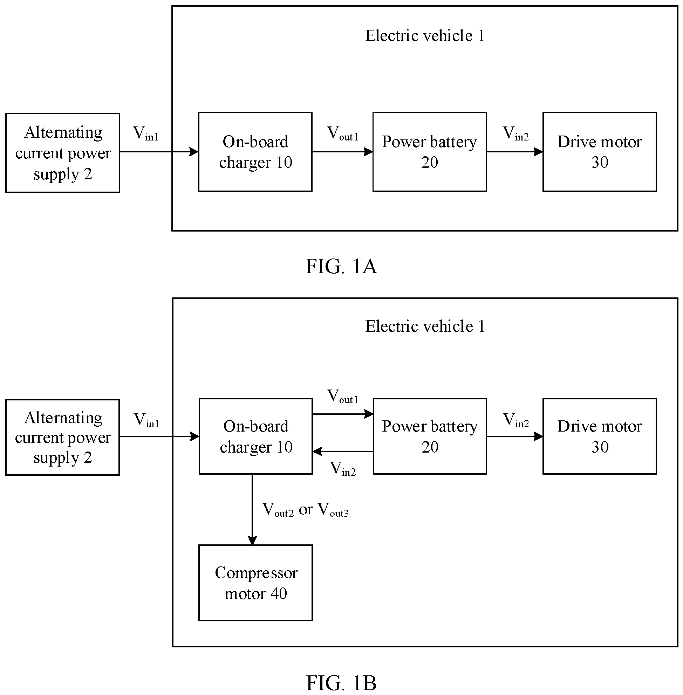

FIG. 1A is a diagram of a structure of an electric vehicle according to this application. As shown in FIG. 1A, the electric vehicle 1 includes an on-board charger 10, a power battery 20, and a drive motor 30. The on-board charger 10 is configured to receive an input voltage Vᵢₙ₁ provided by an alternating current power supply 2, and provide an output voltage Vₒᵤₜ₁ to supply power to the power battery 20. The power battery 20 is configured to provide an input voltage Vᵢₙ₂ for the drive motor 30 to supply power to the drive motor 30.

FIG. 1B is a diagram of another structure of an electric vehicle according to this application. As shown in FIG. 1B, the electric vehicle 1 includes the on-board charger 10, the power battery 20, the drive motor 30, and a compressor motor 40. In an embodiment, the on-board charger 10 is configured to receive an input voltage Vᵢₙ₁ provided by an alternating current power supply 2, and provide an output voltage Vₒᵤₜ₁ to supply power to the power battery 20. The power battery 20 is configured to provide an input voltage Vᵢₙ₂ for the drive motor 30 to supply power to the drive motor 30.

In an embodiment, the on-board charger 10 is configured to receive an input voltage Vᵢₙ₁ provided by the alternating current power supply 2, and provide an output voltage Vₒᵤₜ₂ to supply power to the compressor motor 40. In another embodiment, the on-board charger 10 is configured to receive an input voltage Vᵢₙ₂ provided by the power battery 20, and provide an output voltage Vₒᵤₜ₃ to supply power to the compressor motor 40.

In an embodiment, the on-board charger 10 is configured to receive an input voltage Vᵢₙ₁ provided by the alternating current power supply 2, and respectively provide an output voltage Vₒᵤₜ₁ and an output voltage Vₒᵤₜ₂ to supply power to the power battery 20 and the compressor motor 40. In an embodiment, the compressor motor 40 is disposed in an air conditioning compressor of the electric vehicle 1. After the on-board charger 10 supplies power to the compressor motor 40, an air conditioning refrigeration system of the electric vehicle 1 works normally.

The on-board charger 10 provided in embodiments of this application may be compatible with a function of supplying power to the power battery 20 and a function of supplying power to the compressor motor 40, thereby simplifying a structural layout of the electric vehicle 1. Therefore, costs are low, a size is small, and an integration level is high. In an embodiment, the on-board charger 10 and the compressor motor 40 may share a high-voltage power distribution box in the electric vehicle 1, so that a quantity of high-voltage components in the electric vehicle 1 is reduced. Therefore, costs are lower, and applicability is high.

The alternating current power supply 2 provided in embodiments of this application may be an alternating current power grid, an alternating current charging pile, or an uninterruptible power supply (uninterruptible power system, UPS).

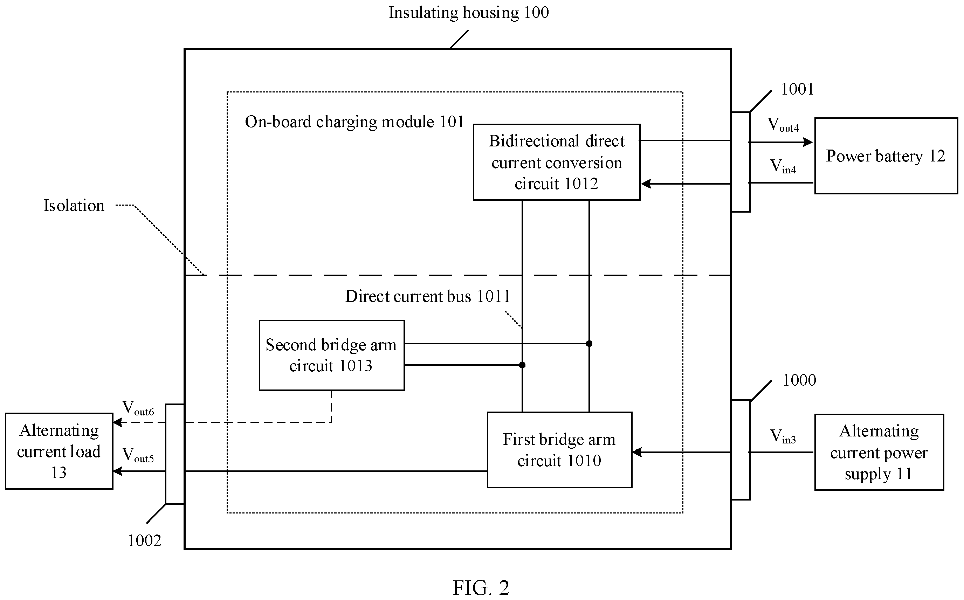

FIG. 2 is a diagram of a structure of an on-board charger according to this application. The on-board charger 10 is configured to supply power to at least one of a power battery 12 and an alternating current load 13 by using an alternating current power supply 11, or supply power to an alternating current load 13 by using a power battery 12. At least one of the power battery 12 and the alternating current load 13 includes the power battery 12, or the alternating current load 13, or the power battery 12 and the alternating current load 13. In an embodiment, the alternating current power supply 11 may be an alternating current power grid, an alternating current charging pile, or an uninterruptible power supply. The alternating current load 13 may be a compressor motor or another low-power motor.

As shown in FIG. 2, the on-board charger 10 includes an insulating housing 100 and an on-board charging module 101, and the on-board charging module 101 is disposed inside the insulating housing 100. The insulating housing 100 is provided with an alternating current power supply input port 1000, a power battery connection port 1001, and an alternating current load power supply port 1002. The alternating current power supply input port 1000 and the alternating current load power supply port 1002 are provided opposite to each other on two sides of the insulating housing 100, and the alternating current power supply input port 1000 and the power battery connection port 1001 are provided on a same side of the insulating housing 100. In an embodiment, the alternating current power supply input port 1000 and the power battery connection port 1001 are provided on a right side of the insulating housing 100, and the alternating current load power supply port 1002 is provided on a left side of the insulating housing 100.

The on-board charging module 101 includes a first bridge arm circuit 1010, a direct current bus 1011, a bidirectional direct current conversion circuit 1012, and a second bridge arm circuit 1013. The first bridge arm circuit 1010 is disposed on a side that is inside the insulating housing 100 and that is close to the alternating current power supply input port 1000, the second bridge arm circuit 1013 is disposed on a side that is inside the insulating housing 100 and that is close to the alternating current load power supply port 1002, the bidirectional direct current conversion circuit 1012 is disposed on the side that is inside the insulating housing 100 and that is close to the power battery connection port 1001, and both the first bridge arm circuit 1010 and the second bridge arm circuit 1013 are isolated from the bidirectional direct current conversion circuit 1012 to implement circuit protection.

In an embodiment, the first bridge arm circuit 1010 is connected to the alternating current power supply 11 through the alternating current power supply input port 1000, the second bridge arm circuit 1013 is connected to the alternating current load 13 through the alternating current load power supply port 1002, and the bidirectional direct current conversion circuit 1012 is connected to the power battery 12 through the power battery connection port 1001. In another embodiment, the first bridge arm circuit 1010 is connected to the alternating current load 13 through the alternating current load power supply port 1002.

The direct current bus 1011 is configured to transmit a first direct current. The direct current bus 1011 is an intermediate bus of the on-board charger 10.

The bidirectional direct current conversion circuit 1012 is configured to receive the first direct current, and output a second direct current Vₒᵤₜ₄ through the power battery connection port 1001 to supply power to the power battery 12, or configured to receive, through the power battery connection port 1001, power supplied by the power battery 12, and output the first direct current. In an embodiment, the bidirectional direct current conversion circuit 1012 is configured to receive, through the power battery connection port 1001, an input voltage Vᵢₙ₄ provided by the power battery 12, and output the first direct current.

The first bridge arm circuit 1010 is configured to receive an alternating current through the alternating current power supply input port 1000, and output the first direct current, or configured to receive the first direct current, and output a first alternating current Vₒᵤₜ₅ through the alternating current load power supply port 1002 to supply power to the alternating current load 13. The first bridge arm circuit 1010 is an alternating current-direct current (alternating current-direct current, AC-DC) conversion circuit.

The second bridge arm circuit 1013 is configured to receive the first direct current, and output a second alternating current Vₒᵤₜ₆ through the alternating current load power supply port 1002 to supply power to the alternating current load 13. The first bridge arm circuit 1010 is a DC-AC conversion circuit.

The on-board charger 10 provided in embodiments of this application may supply power to the power battery 20 alone, supply power to the alternating current load 13 alone, or supply power to both the power battery 20 and the alternating current load 13, thereby meeting different power supply requirements of the on-board charger 10. Therefore, power supply flexibility is high. It can be learned that the on-board charger 10 is compatible with a function of supplying power to the power battery 20 and a function of supplying power to the alternating current load 13. Therefore, a structural layout is simpler, an integration level is high, costs are lower, and applicability is high.

In an embodiment, the second bridge arm circuit 1013 is connected in series between a positive electrode and a negative electrode of the direct current bus 1011, so that a voltage level of the second bridge arm circuit 1013 and a voltage level of the direct current bus 1011 may be normalized, thereby facilitating design and model selection of the alternating current load 13. Therefore, costs are lower, and applicability is high.

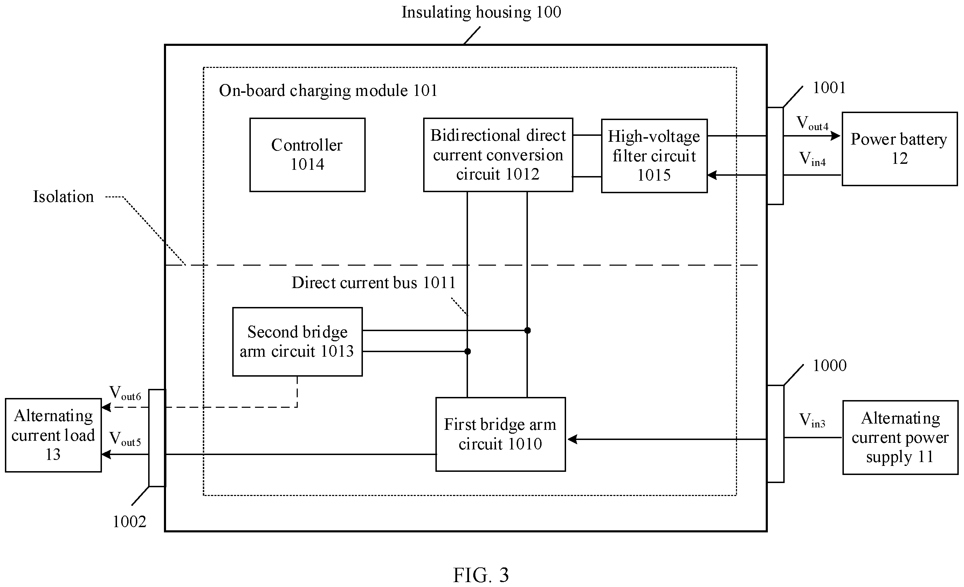

FIG. 3 is a diagram of another structure of an on-board charger according to this application. As shown in FIG. 3, the on-board charger 10 includes an insulating housing 100 and an on-board charging module 101. The insulating housing 100 is provided with an alternating current power supply input port 1000, a power battery connection port 1001, and an alternating current load power supply port 1002. The on-board charging module 101 includes a first bridge arm circuit 1010, a direct current bus 1011, a bidirectional direct current conversion circuit 1012, a second bridge arm circuit 1013, a controller 1014, and a high-voltage filter circuit 1015. For position relationships among the first bridge arm circuit 1010, the direct current bus 1011, the bidirectional direct current conversion circuit 1012, the second bridge arm circuit 1013, the alternating current power supply input port 1000, the power battery connection port 1001, and the alternating current load power supply port 1002, refer to the embodiment corresponding to FIG. 2. Details are not described below again.

The controller 1014, the high-voltage filter circuit 1015, and the bidirectional direct current conversion circuit 1012 are disposed on a same side inside the insulating housing 100, and both the controller 1014 and the high-voltage filter circuit 1015 are isolated from the first bridge arm circuit 1010.

In an embodiment, the controller 1014 may be a control circuit, a control chip, or software code. In an embodiment, the controller 1014 may be connected to the first bridge arm circuit 1010, the bidirectional direct current conversion circuit 1012, and the second bridge arm circuit 1013 in a wired or wireless manner.

In an embodiment, the controller 1014 is configured to control operating of the first bridge arm circuit 1010, the bidirectional direct current conversion circuit 1012, and the second bridge arm circuit 1013. Specifically, the controller 1014 is configured to control turn-on or turn-off of a plurality of switches in the first bridge arm circuit 1010, the bidirectional direct current conversion circuit 1012, or the second bridge arm circuit 1013, thereby controlling operating of the first bridge arm circuit 1010, the bidirectional direct current conversion circuit 1012, or the second bridge arm circuit 1013. It can be learned that the first bridge arm circuit 1010, the bidirectional direct current conversion circuit 1012, and the second bridge arm circuit 1013 share the controller 1014, thereby reducing costs of the controller.

In an embodiment, the plurality of switches in the first bridge arm circuit 1010, the bidirectional direct current conversion circuit 1012, or the second bridge arm circuit 1013 include but are not limited to an insulated gate bipolar transistor (insulated gate bipolar transistor, IGBT) or a metal-oxide-semiconductor field-effect transistor (metal-oxide-semiconductor field-effect transistor, MOSFET). The metal-oxide-semiconductor field-effect transistor may be referred to as a MOS transistor for short. The plurality of switches may be made of a silicon semiconductor material Si, or a third-generation wide-bandgap semiconductor material silicon carbide SiC or gallium nitride GaN. This may be specifically determined according to an actual application scenario, and is not limited herein.

In an embodiment, the high-voltage filter circuit 1015 is configured to: receive a second direct current Vₒᵤₜ₄ output by the bidirectional direct current conversion circuit 1012, perform high-voltage filtering processing, and supply power to a power battery 12 through the power battery connection port 1001. Alternatively, the high-voltage filter circuit 1015 is configured to: receive, through the power battery connection port 1001, an input voltage Vᵢₙ₄ provided by a power battery 12, perform high-voltage filtering processing, and output the processed input voltage Vᵢₙ₄ to the bidirectional direct current conversion circuit 1012. The high-voltage filter circuit 1015 includes but is not limited to a capacitor filter circuit, an inductor filter circuit, an RC filter circuit, or an LC filter circuit.

In an embodiment, the first bridge arm circuit 1010, the bidirectional direct current conversion circuit 1012, and the second bridge arm circuit 1013 share the high-voltage filter circuit 1015, so that two-level short-circuit protection of the first bridge arm circuit 1010, the bidirectional direct current conversion circuit 1012, and the second bridge arm circuit 1013 is implemented, and a high-voltage network resonance risk of a system is reduced, thereby improving stability of the system. In addition, fuses of power distribution are reduced, and there is no need to dispose a plurality of independent high-voltage filter circuits. Therefore, costs are lower, and applicability is higher.

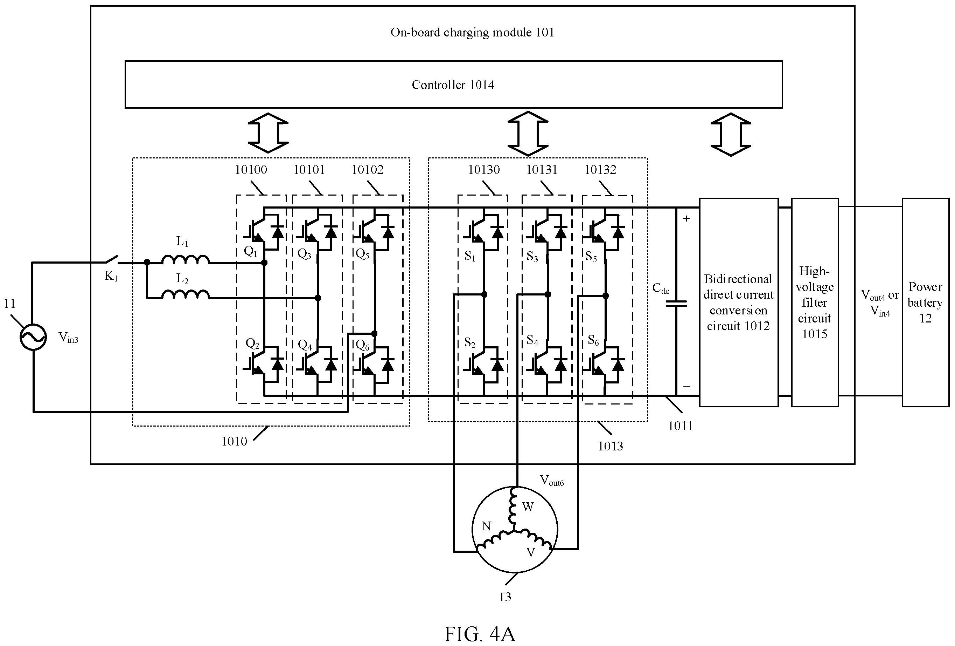

FIG. 4A is a schematic of a circuit of an on-board charging module according to this application. As shown in FIG. 4A, the first bridge arm circuit 1010 includes a first bridge arm 10100, a second bridge arm 10101, and a third bridge arm 10102. Each of the first bridge arm 10100, the second bridge arm 10101, and the third bridge arm 10102 is connected in series between the positive electrode and the negative electrode of the direct current bus 1011. A midpoint of each of the first bridge arm 10100 and the second bridge arm 10101 is connected to a live wire of the alternating current power supply 11, and a midpoint of the third bridge arm 10102 is connected to a neutral wire of the alternating current power supply 11. Each of the first bridge arm 10100, the second bridge arm 10101, and the third bridge arm 10102 includes a first switch and a second switch connected in series, and a series connection point of the first switch and the second switch serves as a midpoint of each bridge arm. The first switch and the second switch are complementarily turned on. To be specific, the second switch is turned off when the first switch is turned on, or the second switch is turned on when the first switch is turned off.

In embodiments of this application, the first bridge arm 10100 includes a first switch Q₁ and a second switch Q₂ connected in series, and a series connection point of the first switch Q₁ and the second switch Q₂ serves a midpoint of the first bridge arm 10100. The second bridge arm 10101 includes a first switch Q₃ and a second switch Q₄ connected in series, and a series connection point of the first switch Q₃ and the second switch Q₄ serves as a midpoint of the second bridge arm 10101. The third bridge arm 10102 includes a first switch Q₅ and a second switch Q₆ connected in series, and a series connection point of the first switch Q₅ and the second switch Q₆ serves as a midpoint of the third bridge arm 10102.

In an embodiment, the first bridge arm circuit 1010 includes a filter inductor L₁ and a filter inductor L₂. The midpoint of the first bridge arm 10100 is connected to the live wire of the alternating current power supply 11 through the filter inductor L₁, and the midpoint of the second bridge arm 10101 is connected to the live wire of the alternating current power supply 11 through the filter inductor L₂.

The second bridge arm circuit 1013 includes three fourth bridge arms, and the three fourth bridge arms include a fourth bridge arm 10130, a fourth bridge arm 10131, and a fourth bridge arm 10132. Each of the fourth bridge arm 10130, the fourth bridge arm 10131, and the fourth bridge arm 10132 is connected in series between the positive electrode and the negative electrode of the direct current bus 1011, each of the fourth bridge arm 10130, the fourth bridge arm 10131, and the fourth bridge arm 10132 includes a third switch and a fourth switch connected in series, and a series connection point of the third switch and the fourth switch serves as a midpoint of each fourth bridge arm. The third switch and the fourth switch are complementarily turned on. To be specific, the fourth switch is turned off when the third switch is turned on, or the fourth switch is turned on when the third switch is turned off.

In embodiments of this application, the fourth bridge arm 10130 includes a switch S₁ and a switch S₂ connected in series, and a series connection point of the switch S₁ and the switch S₂ serves as a midpoint of the fourth bridge arm 10130. The fourth bridge arm 10131 includes a switch S₃ and a switch S₄ connected in series, and a series connection point of the switch S₃ and the switch S₄ serves as a midpoint of the fourth bridge arm 10131. The fourth bridge arm 10132 includes a switch S₅ and a switch S₆ connected in series, and a series connection point of the switch S₅ and the switch S₆ serves as a midpoint of the fourth bridge arm 10132.

The midpoint of each fourth bridge arm is connected to the alternating current load 13 through the alternating current load power supply port 1002. In an embodiment, the alternating current load 13 is a compressor motor, the alternating current load 13 includes a stator winding N, a stator winding W, and a stator winding V, and one end of each of the stator winding N, the stator winding W, and the stator winding V is connected to each other. The midpoint of the fourth bridge arm 10130 is connected to the other end of the stator winding N, the midpoint of the fourth bridge arm 10131 is connected to the other end of the stator winding W, and the midpoint of the fourth bridge arm 10132 is connected to the other end of the stator winding V.

The bidirectional direct current conversion circuit 1012 is connected in series between the positive electrode and the negative electrode of the direct current bus 1011, and the high-voltage filter circuit 1015 is connected in series between the positive electrode and the negative electrode of the direct current bus 1011.

In an embodiment, the on-board charging module 101 includes a bus capacitor C_{dc}, and the bus capacitor C_{dc} is connected in series between the positive electrode and the negative electrode of the direct current bus 1011. A voltage at two ends of the bus capacitor C_{dc} is the first direct current transmitted by the direct current bus 1011.

In an embodiment, the on-board charging module 101 includes a fifth switch K₁, and the midpoint of each of the first bridge arm 10100 and the second bridge arm 10101 is connected to the live wire of the alternating current power supply 11 through the fifth switch K₁. The fifth switch K₁ may be turned on or turned off to connect or disconnect a loop between the first bridge arm circuit 1010 and the alternating current power supply 11.

The on-board charger 10 provided in embodiments of this application is configured to supply power to the power battery 12 by using the alternating current power supply 11. The controller 1014 is configured to: control the first switch and the second switch in each of the first bridge arm 10100, the second bridge arm 10101, and the third bridge arm 10102 to be alternately turned on, to convert an alternating current Vᵢₙ₃ received by the alternating current power supply input port 1000 into the first direct current, and control the bidirectional direct current conversion circuit 1012 to operate, to convert the first direct current into the second direct current Vₒᵤₜ₄; and further control the third switch and the fourth switch in each fourth bridge arm to be turned off, that is, the second bridge arm circuit 1013 stops operating. The high-voltage filter circuit 1015 is configured to: receive the second direct current Vₒᵤₜ₄, perform high-voltage filtering processing, and supply power to the power battery 12.

In an embodiment, that the first switch and the second switch in each bridge arm are alternately turned on includes: In one time period, in each bridge arm, the first switch is turned on and the second switch is turned off; and in another time period, in each bridge arm, the first switch is turned off and the second switch is turned on. The one time period and the another time period are within one switching period of each bridge arm, and the another time period is after the one time period. It can be learned that the controller 1014 may control switches in each of the first bridge arm circuit 1010, the bidirectional direct current conversion circuit 1012, and the second bridge arm circuit 1013 to be turned on or turned off, so that the alternating current power supply 11 supplies power to the power battery 12 alone.

The on-board charger 10 provided in embodiments of this application is configured to supply power to the alternating current load 13 by using the alternating current power supply 11. The controller 1014 is configured to: control the first switch and the second switch in each of the first bridge arm 10100, the second bridge arm 10101, and the third bridge arm 10102 to be alternately turned on, to convert an alternating current Vᵢₙ₃ received by the alternating current power supply input port 1000 into the first direct current, and control the bidirectional direct current conversion circuit 1012 to stop operating; and further control the third switch and the fourth switch in each fourth bridge arm to be alternately turned on, to convert the first direct current into the second alternating current Vₒᵤₜ₆. The stator winding N, the stator winding W, and the stator winding V may be configured to receive the second alternating current Vₒᵤₜ₆ and start working.

In an embodiment, that the third switch and the fourth switch in each fourth bridge arm are alternately turned on includes: In one time period, in each fourth bridge arm, the third switch is turned on and the fourth switch is turned off; and in another time period, in each fourth bridge arm, the third switch is turned off and the fourth switch is turned on. The one time period and the another time period are within one switching period of each fourth bridge arm, and the another time period is after the one time period. It can be learned that the controller 1014 may control switches in each of the first bridge arm circuit 1010, the bidirectional direct current conversion circuit 1012, and the second bridge arm circuit 1013 to be turned on or turned off, so that the alternating current power supply 11 supplies power to the alternating current load 13 alone. Therefore, applicability is high.

The on-board charger 10 provided in embodiments of this application is configured to supply power to the power battery 12 and the alternating current load 13 by using the alternating current power supply 11. The controller 1014 is configured to: control the first switch and the second switch in each of the first bridge arm 10100, the second bridge arm 10101, and the third bridge arm 10102 to be alternately turned on, to convert an alternating current Vᵢₙ₃ received by the alternating current power supply input port 1000 into the first direct current; control the bidirectional direct current conversion circuit 1012 to operate, to convert the first direct current into the second direct current Vₒᵤₜ₄; and further control the third switch and the fourth switch in each fourth bridge arm to be alternately turned on, to convert the first direct current into the second alternating current Vₒᵤₜ₆. The high-voltage filter circuit 1015 is configured to: receive the second direct current Vₒᵤₜ₄, perform high-voltage filtering processing, and supply power to the power battery 12. The stator winding N, the stator winding W, and the stator winding V may be configured to receive the second alternating current Vₒᵤₜ₆ and start working.

It can be learned that the controller 1014 may control switches in each of the first bridge arm circuit 1010, the bidirectional direct current conversion circuit 1012, and the second bridge arm circuit 1013 to be turned on or turned off, so that the alternating current power supply 11 supplies power to both the power battery 12 and the alternating current load 13. Therefore, power supply efficiency is higher.

In an embodiment, the on-board charger 10 is configured to supply power to at least one of the power battery 12 and the alternating current load 13 by using the alternating current power supply 11. The controller 1014 is configured to control the fifth switch K₁ to be turned on. For control manners of the switches in each of the first bridge arm circuit 1010, the bidirectional direct current conversion circuit 1012, and the second bridge arm circuit 1013, refer to the descriptions in the foregoing embodiments. Details are not described herein again.

The on-board charger 10 provided in embodiments of this application is configured to supply power to the alternating current load 13 by using the power battery 12. The high-voltage filter circuit 1015 is configured to receive the input voltage Vᵢₙ₄ provided by the power battery 12 and perform high-voltage filtering processing. The controller 1014 is configured to control the bidirectional direct current conversion circuit 1012 to operate, to convert the input voltage Vᵢₙ₄ obtained after high-voltage filtering processing into the first direct current. The controller 1014 is configured to: control the first switch and the second switch in each of the first bridge arm 10100, the second bridge arm 10101, and the third bridge arm 10102 to be turned off, and control the third switch and the fourth switch in each fourth bridge arm to be alternately turned on, to convert the first direct current into the second alternating current Vₒᵤₜ₆. The stator winding N, the stator winding W, and the stator winding V are configured to receive the second alternating current Vₒᵤₜ₆ and start working.

It can be learned that the controller 1014 may control switches in each of the first bridge arm circuit 1010, the bidirectional direct current conversion circuit 1012, and the second bridge arm circuit 1013 to be turned on or turned off, so that the power battery 12 supplies power to the alternating current load 13. Therefore, applicability is high.

In an embodiment, the on-board charger 10 is configured to supply power to the alternating current load 13 by using the power battery 12. The controller 1014 is configured to control the fifth switch K₁ to be turned off. For control manners of the switches in each of the first bridge arm circuit 1010, the bidirectional direct current conversion circuit 1012, and the second bridge arm circuit 1013, refer to the descriptions in the foregoing embodiments. Details are not described herein again.

The on-board charger 10 provided in embodiments of this application is configured to supply power to the alternating current load 13 by using the power battery 12. The controller 1014 is configured to control a switching duty cycle of the bidirectional direct current conversion circuit 1012 to adjust the first direct current transmitted by the direct current bus 1011. The switching duty cycle is determined by an operating parameter of the alternating current load 13. For example, the operating parameter may be an operating speed required by the compressor motor. It can be learned that the controller 1014 may control the switching duty cycle to dynamically adjust a voltage value corresponding to the first direct current, so that the alternating current load 13 works efficiently. Therefore, applicability is high.

In an embodiment, a voltage of the first direct current transmitted by the direct current bus 1011 and the voltage at the two ends of the bus capacitor C_{dc} are a same voltage, and the voltage at the two ends of the bus capacitor C_{dc} may be referred to as a bus voltage for short. Therefore, the controller 1014 may control the switching duty cycle to dynamically adjust a voltage value corresponding to the bus voltage, and applicability is high.

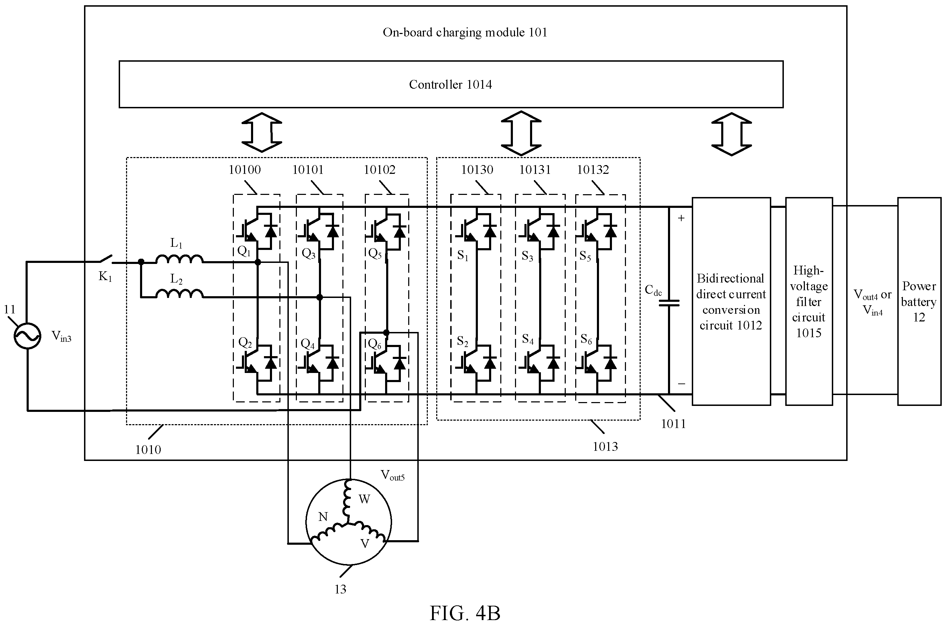

FIG. 4B is a schematic of another circuit of an on-board charging module according to this application. As shown in FIG. 4B, a midpoint of each of the first bridge arm 10100, the second bridge arm 10101, and the third bridge arm 10102 is connected to the alternating current load 13 through the alternating current load power supply port 1002. In an embodiment, the alternating current load 13 is a compressor motor, the alternating current load 13 includes a stator winding N, a stator winding W, and a stator winding V, and one end of each of the stator winding N, the stator winding W, and the stator winding V is connected to each other. The midpoint of the first bridge arm 10100 is connected to the other end of the stator winding N, the midpoint of the second bridge arm 10101 is connected to the other end of the stator winding W, and the midpoint of the third bridge arm 10102 is connected to the other end of the stator winding V.

It should be noted that, for specific connection relationships and circuit structures among the first bridge arm circuit 1010, the bidirectional direct current conversion circuit 1012, the second bridge arm circuit 1013, and the high-voltage filter circuit 1015, refer to the description of the embodiment corresponding to FIG. 4A. Details are not described herein again.

The on-board charger 10 provided in embodiments of this application is configured to supply power to the alternating current load 13 by using the power battery 12. The high-voltage filter circuit 1015 is configured to receive the input voltage Vᵢₙ₄ provided by the power battery 12 and perform high-voltage filtering processing. The controller 1014 is configured to control the bidirectional direct current conversion circuit 1012 to operate, to convert the input voltage Vᵢₙ₄ obtained after high-voltage filtering processing into the first direct current. The controller 1014 is configured to: control a fifth switch K₁ to be turned off, and control a first switch and a second switch in each of the first bridge arm 10100, the second bridge arm 10101, and the third bridge arm 10102 to be alternately turned on, to convert the first direct current into the first alternating current Vₒᵤₜ₅; and further control the third switch and the fourth switch in each fourth bridge arm to be turned off, that is, the second bridge arm circuit 1013 stops operating. The stator winding N, the stator winding W, and the stator winding V are configured to receive the first alternating current Vₒᵤₜ₅ and start working.

It can be learned that the controller 1014 may: control switches in each of the first bridge arm circuit 1010, the bidirectional direct current conversion circuit 1012, and the second bridge arm circuit 1013 to be turned on or turned off, so that the power battery 12 supplies power to the alternating current load 13; and control the fifth switch K₁ to be turned off, so that a short circuit of the alternating current power supply 11 is avoided, thereby improving power supply safety of the load.

In the on-board charger 10 provided in this application, the controller 1014 may control the switches in each of the first bridge arm circuit 1010, the bidirectional direct current conversion circuit 1012, and the second bridge arm circuit 1013 to be turned on or turned off, so that the alternating current power supply 11 supplies power to the power battery 12 alone, or the alternating current power supply 11 supplies power to the alternating current load 13 alone, or the alternating current power supply 11 supplies power to both the power battery 12 and the alternating current load 13, or the power battery 12 supplies power to the alternating current load 13, thereby meeting different power supply requirements of the on-board charger 10. Therefore, power supply flexibility is high.

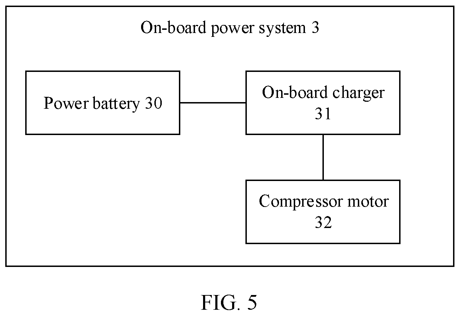

FIG. 5 is a diagram of a structure of an on-board power system according to this application. As shown in FIG. 5, the on-board power system 3 includes a power battery 30 and an on-board charger 31, and the on-board charger 31 is configured to supply power to a power battery 30. Because a structural layout of the on-board charger 31 is simpler and an integration level is high, a structural layout of the on-board power system 3 is simplified, and a power density of the on-board power system 3 is improved. In an embodiment, the on-board power system 3 includes a compressor motor 32, and the on-board charger 31 is configured to supply power to the compressor motor 32 by using an alternating current power supply or supply power to the compressor motor 32 by using the power battery 30. Therefore, power supply flexibility is high.

In an embodiment, the on-board charger 31 and the compressor motor 32 may share a high-voltage power distribution box in the on-board power system 3, thereby reducing a quantity of high-voltage components in the on-board power system 3. Therefore, costs are lower, and applicability is high.

In an embodiment, the on-board power system 3 may be a power system in an electric vehicle, and the compressor motor 32 may be an air conditioning compressor motor in the electric vehicle. After the on-board charger 31 supplies power to the compressor motor 32, an air conditioning refrigeration system in the electric vehicle starts working.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An on-board charger, configured to supply power to at least one of a power battery and an alternating current load by using an alternating current power supply, or supply power to the alternating current load by using the power battery, wherein the on-board charger comprises:
an insulating housing, provided with an alternating current power supply input port, a power battery connection port, and an alternating current load power supply port; and
an on-board charging module, disposed inside the insulating housing, and comprising a first bridge arm circuit, a direct current bus, a bidirectional direct current conversion circuit, and a second bridge arm circuit, wherein
the direct current bus is configured to transmit a first direct current;
the bidirectional direct current conversion circuit is configured to receive the first direct current, and output a second direct current through the power battery connection port to supply power to the power battery, or configured to receive, through the power battery connection port, power supplied by the power battery, and output the first direct current;
the first bridge arm circuit is configured to receive an alternating current through the alternating current power supply input port, and output the first direct current, or configured to receive the first direct current, and output a first alternating current through the alternating current load power supply port to supply power to the alternating current load; and
the second bridge arm circuit is configured to receive the first direct current, and output a second alternating current through the alternating current load power supply port to supply power to the alternating current load.

2. The on-board charger according to claim 1, wherein the alternating current power supply input port and the alternating current load power supply port are provided opposite to each other on two sides of the insulating housing, and the alternating current power supply input port and the power battery connection port are provided on a same side of the insulating housing; and
the first bridge arm circuit is disposed on a side that is inside the insulating housing and that is close to the alternating current power supply input port, the second bridge arm circuit is disposed on a side that is inside the insulating housing and that is close to the alternating current load power supply port, the bidirectional direct current conversion circuit is disposed on the side that is inside the insulating housing and that is close to the power battery connection port, and both the first bridge arm circuit and the second bridge arm circuit are isolated from the bidirectional direct current conversion circuit.

3. The on-board charger according to claim 1 or 2, wherein the first bridge arm circuit comprises a first bridge arm, a second bridge arm, and a third bridge arm, wherein each of the first bridge arm, the second bridge arm, and the third bridge arm is connected in series between a positive electrode and a negative electrode of the direct current bus, a midpoint of each of the first bridge arm and the second bridge arm is connected to a live wire of the alternating current power supply, and a midpoint of the third bridge arm is connected to a neutral wire of the alternating current power supply; and
each of the first bridge arm, the second bridge arm, and the third bridge arm comprises a first switch and a second switch connected in series, and a series connection point of the first switch and the second switch serves as a midpoint of each bridge arm.

4. The on-board charger according to claim 3, wherein the second bridge arm circuit comprises three fourth bridge arms, each of the three fourth bridge arms is connected in series between the positive electrode and the negative electrode of the direct current bus, and each fourth bridge arm comprises a third switch and a fourth switch connected in series.

5. The on-board charger according to claim 4, wherein the on-board charger is configured to supply power to the power battery by using the alternating current power supply, and the on-board charging module comprises a controller, wherein
the controller is configured to:
control the first switch and the second switch in each of the first bridge arm, the second bridge arm, and the third bridge arm to be alternately turned on, to convert the alternating current received by the alternating current power supply input port into the first direct current, and control the bidirectional direct current conversion circuit to operate, to convert the first direct current into the second direct current; and
control the third switch and the fourth switch in each fourth bridge arm to be turned off.

6. The on-board charger according to claim 4, wherein the on-board charger is configured to supply power to the alternating current load by using the alternating current power supply, and the on-board charging module comprises a controller, wherein
the controller is configured to:
control the first switch and the second switch in each of the first bridge arm, the second bridge arm, and the third bridge arm to be alternately turned on, to convert the alternating current received by the alternating current power supply input port into the first direct current, and control the bidirectional direct current conversion circuit to stop operating; and
control the third switch and the fourth switch in each fourth bridge arm to be alternately turned on, to convert the first direct current into the second alternating current.

7. The on-board charger according to claim 4, wherein the on-board charger is configured to supply power to the power battery and the alternating current load by using the alternating current power supply, and the on-board charging module comprises a controller, wherein the controller is configured to:
control the first switch and the second switch in each of the first bridge arm, the second bridge arm, and the third bridge arm to be alternately turned on, to convert the alternating current received by the alternating current power supply input port into the first direct current;
control the bidirectional direct current conversion circuit to operate, to convert the first direct current into the second direct current; and
control the third switch and the fourth switch in each fourth bridge arm to be alternately turned on, to convert the first direct current into the second alternating current.

8. The on-board charger according to claim 4, wherein the on-board charger is configured to supply power to the alternating current load by using the power battery, the on-board charging module comprises a controller and a fifth switch, and the midpoint of each of the first bridge arm and the second bridge arm is connected to the live wire of the alternating current power supply through the fifth switch, wherein
the controller is configured to:
control the fifth switch to be turned off, and control the first switch and the second switch in each of the first bridge arm, the second bridge arm, and the third bridge arm to be alternately turned on, to convert the first direct current into the first alternating current; and
control the third switch and the fourth switch in each fourth bridge arm to be turned off.

9. The on-board charger according to claim 4, wherein the on-board charger is configured to supply power to the alternating current load by using the power battery, and the on-board charging module comprises a controller, wherein
the controller is configured to:
control the first switch and the second switch in each of the first bridge arm, the second bridge arm, and the third bridge arm to be turned off, and control the third switch and the fourth switch in each fourth bridge arm to be alternately turned on, to convert the first direct current into the second alternating current.

10. The on-board charger according to claim 9, wherein the controller is configured to:
control a switching duty cycle of the bidirectional direct current conversion circuit to adjust the first direct current transmitted by the direct current bus, wherein the switching duty cycle is determined by an operating parameter of the alternating current load.

11. The on-board charger according to any one of claims 4 to 10, wherein the midpoint of each of the first bridge arm, the second bridge arm, and the third bridge arm is connected to the alternating current load through the alternating current load power supply port; or
a midpoint of each fourth bridge arm is connected to the alternating current load through the alternating current load power supply port, and a series connection point of the third switch and the fourth switch in each fourth bridge arm serves as the midpoint of each fourth bridge arm.

12. An on-board power system, comprising a power battery and the on-board charger according to any one of claims 1 to 11, wherein
the on-board charger is configured to supply power to the power battery.

13. The system according to claim 12, wherein the on-board power system comprises a compressor motor, and the on-board charger is configured to supply power to the compressor motor by using the alternating current power supply or supply power to the compressor motor by using the power battery.

14. An electric vehicle, comprising a power battery, a drive motor, and the on-board charger according to any one of claims 1 to 11, wherein
the on-board charger is configured to supply power to the power battery, and the power battery is configured to supply power to the drive motor.
